(19) Europäisches Patentamt
European Patent Office
Office européen des brevets

(11) **EP 1 980 823 B1**

(12) **EUROPÄISCHE PATENTSCHRIFT**

(45) Veröffentlichungstag und Bekanntmachung des Hinweises auf die Patenterteilung:
**23.04.2014 Patentblatt 2014/17**

(51) Int Cl.:
*G01C 21/28* (2006.01)     *G07B 15/00* (2011.01)

(21) Anmeldenummer: **07023849.8**

(22) Anmeldetag: **10.12.2007**

(54) **Verfahren zur Fahrwegbestimmung**

Method for determining driving route

Procédé destiné à la détermination de la trajectoire d'un vehicule

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.04.2007 DE 102007017405**

(43) Veröffentlichungstag der Anmeldung:
**15.10.2008 Patentblatt 2008/42**

(73) Patentinhaber: **Daimler AG**
**70327 Stuttgart (DE)**

(72) Erfinder:
• **Mezger, Klaus**
**70184 Stuttgart (DE)**
• **Passegger, Thomas**
**72555 Metzingen (DE)**

(74) Vertreter: **JENSEN & SON**
**366-368 Old Street**
**London**
**EC1V 9LT (GB)**

(56) Entgegenhaltungen:
EP-A2- 0 110 171     WO-A1-03/038763
US-A- 5 159 556     US-B1- 6 240 367

**Beschreibung**

Die Erfindung betrifft Verfahren zur Bestimmung der von einem Fahrzeug zurückgelegten Fahrstrecke. Insbesondere betrifft die Erfindung derartige Verfahren, wie sie bei Mautsystemen eingesetzt werden, um die Benutzung gebührenpflichtiger Straßenabschnitte automatisch und mit hoher Präzision zu protokollieren.

Einrichtungen in Fahrzeugen zur Bestimmung der Position sind bekannt. Mittels GPS-Empfängern werden im Fahrzeug Signale von verschiedenen Satelliten empfangen und daraus von Navigationssystemen die aktuelle Position bestimmt und auch Fahrtrichtung und Geschwindigkeit berechnet. Letztlich ist aus diesen Daten prinzipiell auch eine kontinuierliche Aufzeichnung von Fahrtrouten möglich. Durch Störung der Signalübertragung der Satelliten kommt es jedoch gelegentlich zu Ausfällen der GPS-Positionsbestimmung, so dass mehr oder weniger lange Teilabschnitte einer Fahrstrecke nicht oder nur sehr ungenau protokolliert werden können.

Für ein Mautsystem, das für eine korrekte Gebührenberechnung auf sehr niedrige Fehler- und Ausfallraten auszulegen ist, sind daher die mit üblichen Navigationsdaten erhaltenen Fahrstreckenprotokolle nicht ausreichend, und es sind für den Ausfall der GPS-Daten zusätzliche Vorkehrungen zu treffen.

Dies geschieht beispielsweise durch eine Stützung der primären GPS-Daten mit einer auf unabhängiger Geschwindigkeitsmessung basierenden Koppelortung. Die hierzu erforderliche Odometerankopplung an mitgeführte Mautgeräte ist jedoch sehr aufwändig und kostenintensiv, da der Anschlusse des Fahrzeugodometers nur von einer qualifizierten Werkstatt durchgeführt werden kann, wobei die Anbindung obendrein für jeden Lkw-Typ unterschiedlich ausfallen kann, was den Aufwand erhöht.

Die Offenlegungsschrift DE102004053956A1 betrifft eine Vorrichtung und Verfahren zur fahrzeugseitigen Erhebung und Verarbeitung positionsbezogener Daten und liegt damit auf gleichem technischem Gebiet. Vorgeschlagen wird darin anstelle einer Odometeranbindung die Bestimmung der Fahrzeuggeschwindigkeit aus der Motordrehzahl in Verbindung mit den jeweiligen Übersetzungsverhältnissen des Fahrzeuggetriebes je nach eingelegtem Gang. Auch hier sind jedoch spezielle Sensoren an die Mautsysteme anzuschließen, wobei die Sensoren mit Fahrzeugkomponenten zu verbinden sind und daher auf den jeweiligen Fahrzeugtyp angepasst sein müssen.

Aus der US 6,240,367 B1 ist ein Verfahren zur Ortsbestimmung unter Verwendung bestehender Ausstattung bekannt, bei denen Signale eines GPS verwendet werden, um die Messgenauigkeit zu erhöhen. Dabei findet eine gegenseitige Korrektur statt.

Aus der WO03/038763 A1 ist eine Einrichtung zur kurzfristigen Überbrückung des Ausfalls eines Satellitennavigationssignals für duale satellitennavigationssystembasierte Mautsysteme bekannt, bei der bei Ausfall des Satellitennavigationssignals ein Trägheitsnavigationssystem zur Ortsbestimmung verwendet wird.

Aus der US 5159556 A ist ein Landnavigationssystem bekannt, bei dem eine Drift von Sensoren des Landnavigationssystems durch einen Vergleich einer auf Basis der Sensoren ermittelten Route mit bekannten Positionen ermittelt wird.

Aus der EP 0110171 ist eine Vorrichtung zur Positionsermittlung bekannt, bei der durch Vergleich einer ermittelten Wegstrecke mit Koordinaten von Abschnitten eines abgespeicherten Streckennetzes ein Korrekturwert ermittelt wird, der zur Ermittlung der wahrscheinlichsten Koordinaten verwendet wird.

Die vorliegende Erfindung geht aus von dem vorgenannten Dokument als nächstliegendem Stand der Technik. Ihr liegt die Aufgabe zugrunde, ein alternatives Verfahren zur Fahrwegbestimmung für Mautsysteme zu entwickeln, das eine GPS-Ausfallüberbrückung ermöglicht, unabhängig von einer Anbindung an Fahrzeugodometer oder Motor- bzw. Getriebekomponenten.

Diese Aufgabe wird bei einem Verfahren mit den Merkmalen des Oberbegriffs des Anspruchs 1 gelöst durch die kennzeichnenden Merkmale des Anspruchs 1. Weitere Details und vorteilhafte Ausführungsformen des erfindungsgemäßen Verfahrens sind genstand der Unteransprüche. Anspruch 6 ist auf die Verwendung des erfindungsgemäßen Verfahren speziell in Mautsystemen gerichtet.

Die Erfindung schlägt vor, während eines GPS-Ausfalls das Richtungs- und Geschwindigkeitsprofil der Fahrt durch Gyroskope und Beschleunigungssensoren aufzuzeichnen und nach Wiedereinsetzen des GPS-Signals den aus den aufgezeichneten Daten kalkulierten Fahrweg mittels spezieller Korrekturverfahren in die Lücke des aus GPS-Daten bekannten Fahrwegs dergestalt einzupassen, dass Drift- und Offsetfehler weitgehend kompensiert werden und so der kalkulierte Fahrweg dem tatsächlichen sehr gut entspricht.

Die Erfindung wird im Folgenden anhand bevorzugter Ausführungsbeispiele unter Bezugnahme auf die Figuren und den darin angegebenen Bezugszeichen näher erläutert.
Dabei zeigen:

Fig. 1     Einfache lineare Überbrückung eines GPS-Ausfalls

Fig. 2     Zerlegung der linearen Überbrückung in Drehung und affine Dehnung/Stauchung

Fig. 3    Bei GPS-Ausfall aus Beschleunigungsdaten kalkulierte Trajektorie des Fahrwegs mit Drift

Fig. 4    Einsetzen der kalkulierten Trajektorie in die GPS-Ausfallstrecke

Fig. 5    Zur Korrektur der aus Beschleunigungsdaten kalkulierten Geschwindigkeit

Fig. 6    Vergleich realer Geschwindigkeitsverlauf und aus Beschleunigungsdaten kalkulierte Geschwindigkeit mit und ohne Korrekturen

Fig. 7    Zur Korrektur der mittels Gyro-Daten kalkulierten Fahrtrichtung

Fig. 8    Vergleich realer Fahrtrichtungsverlauf und aus Gyro-Daten kalkulierter Verlauf mit und ohne Korrekturen

Fig. 9    Schema für einen über einen GPS-Ausfall fortlaufend kalkulierten Fahrweg mit Offset-Korrektur

Fig. 10    Korrektur des kalkulierten Fahrwegs nach Fig. 9 bezüglich Fahrtrichtung bei Ende des GPS-Ausfalls

Fig. 11    Korrektur des kalkulierten Fahrwegs nach Fig. 10 bezüglich Position bei Ende des GPS-Ausfalls mittels linearer Verschiebung

Fig. 12    Korrektur des am Ende des kalkulierten Fahrwegs nach Fig. 11 auftretenden Richtungsfehlers durch Anpassung der Form des Fahrwegs über kubische Approximation

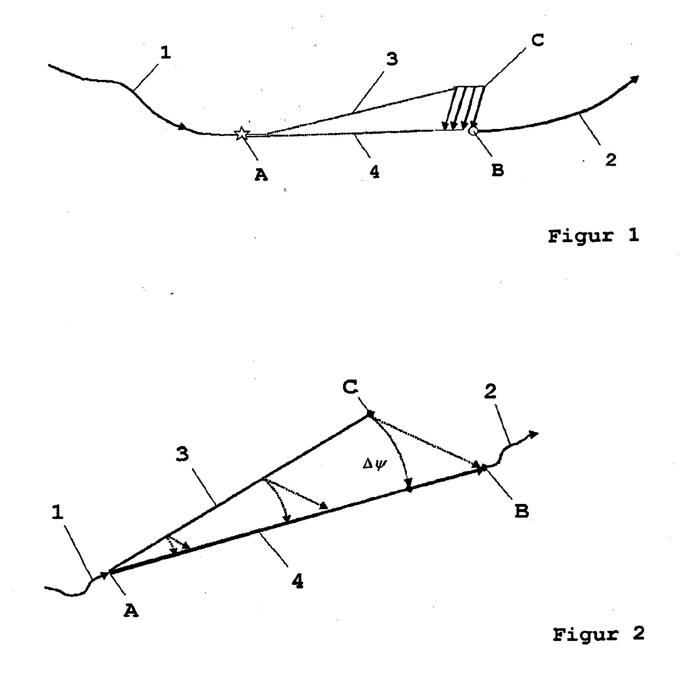

Der Verzicht auf eine Anbindung an Odometer oder Motor- oder Getriebekomponenten zur Geschwindigkeitsmessung erhöht naturgemäß das Risiko einer verschlechterten Fahrstreckenerkennung, speziell in längeren Phasen fehlenden GPS-Empfangs. Die einfachste Möglichkeit zur Überbrückung einer Lücke im GPS-Wege-Protokoll bestünde darin, die bei Ausfall des GPS-Systems vorliegende Geschwindigkeit und Richtung linear fortzuschreiben. In Figur 1 ist ein entsprechender Verlauf eines Fahrtprotokolls wiedergegeben. Die vom GPS-System aufgezeichnete Route (1) endet durch Ausfall des Satellitensignals bei Punkt A und wird fortgeschrieben (2) mit erneutem GPS-Empfang ab Punkt B. Eine lineare Fortschreibung des Fahrwegs ab Ausfallpunkt A mit der zu diesem Zeitpunkt vorliegenden Geschwindigkeit und Fahrtrichtung führt auf eine kalkulierte lineare Fahrstrecke (3), die jedoch nicht auf die tatsächliche Position in B bei wiedereinsetzendem GPS-Signal führt. Zur Korrektur der Abweichung kann dann, wie in Figur 2 dargestellt, eine Verschiebung des Endpunkts C der kalkulierten Strecke (3) auf den Punkt B vorgenommen werden. Dies entspricht einer Kombination aus Drehung der kalkulierten Strecke (3) um den Korrekturwinkel $\Delta\psi$ und anschließender Dehnung (oder Stauchung) bis der Endpunkt C der kalkulierten Strecke (3) mit dem aus GPS-Daten ermittelten Punkt B zusammenfällt.

Die auf diese Weise linear überbrückte Lücke im GPS-Protokoll sagt nichts über die tatsächliche Route im Ausfallzeitraum zwischen den Punkten A und B aus. Bei relativ kurzer Unterbrechung des Satellitensignals und entsprechend kurzem Fahrweg ist dies u.U. für reine Navigationszwecke noch tolerabel, nicht aber für Mautzwecke, da hier grundsätzlich, insbesondere aber auch bei längerer Ausfallzeit, nicht die reine Distanz zwischen A und B, sondern der tatsächliche Fahrtverlauf mit den im Zwischenzeitraum aufgetretenen Richtungsänderungen protokolliert werden soll.

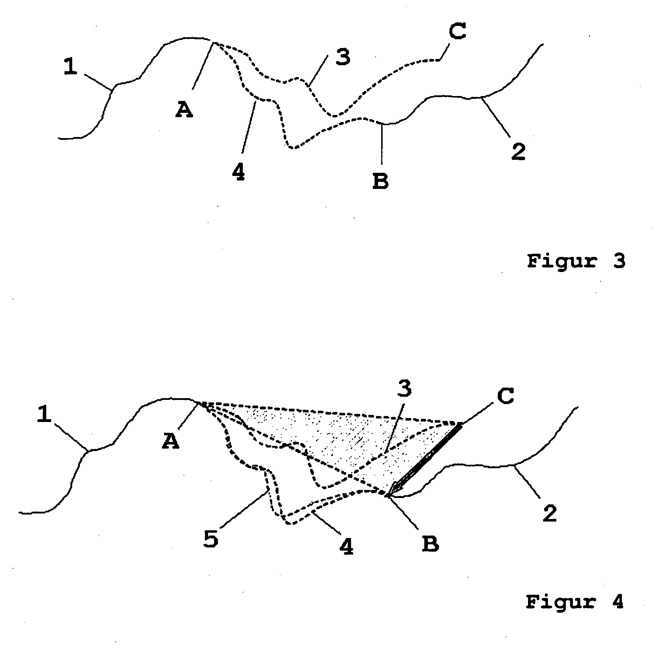

Richtungsänderungen können prinzipiell in einem Fahrzeug ohne Satellitenkontakt aus intern gemessenen Beschleunigungswerten abgeleitet werden, oder direkt mittels Gyroskop detektiert werden. In Figur 3 ist eine Fahrstrecke mit Richtungsänderungen dargestellt, bei der für ein gefahrenes und mittels GPS-Daten protokolliertes Teilstück (4) zwischen den Punkten A und B, parallel ein mutmaßlicher Fahrweg (3) allein aus Beschleunigungs- und Gyroskop-Daten kalkuliert wurde. Dabei zeigt sich wie erwartet, dass die Abweichung zur tatsächlichen Route (4) mit fortlaufender Fahrt immer weiter zunimmt. Die Ursache für diese Divergenz liegt in den grundsätzlich immer unvermeidlichen Störeinflüssen durch Erschütterungen usw., sowie den immer vorhandenen Messfehlern wie z.B. Offset und Drift der eingesetzten Beschleunigungsmesser und Gyroskope.

Figur 4 zeigt für die in Fig. 3 skizzierten Verhältnisse eine einfache nachträglich durchführbare Korrektur. Entsprechend der oben in Fig. 2 dargestellten Kombination aus Drehung und Stauchung wird der Endpunkt C der kalkulierten Fahrstrecke (3) zur Deckung mit der korrekten Position im Punkt B gebracht. Die so korrigierte Fahrstrecke (5) gibt den Verlauf der realen Route (4) zu Beginn und gegen Ende des GPS-Ausfalls einigermaßen gut wieder, im mittleren Bereich sind jedoch weiterhin deutliche Abweichungen erkennbar.

Wie oben ausgeführt, können sowohl Beschleunigungssensoren als auch Gyroskope nicht mit absoluter Genauigkeit arbeiten. Neben den rein statistischen Messfehlern ist jedoch bei allen derartigen Geräten ein kleiner, systematischer Messfehler (Offset) charakteristisch. Diese Abweichung kann prinzipiell durch Vergleiche von erhaltenen Messdaten mit den tatsächlichen Routen (aus GPS-Protokollen) bestimmt werden.

Zur Korrektur des Offsetfehlers des Beschleunigungssensors wird daher erfindungsgemäß vorgeschlagen, die Geschwindigkeit $\hat{v}(t)$ und den Fahrweg $\hat{s}(t)$ während des GPS-Ausfalls aus den gemessenen Beschleunigungs-Signalen $a(t)$ wie folgt zu bestimmen:

$$\hat{v}(t) = v_0 + \int a(t) - \hat{a}_0 \; dt$$

$$\hat{s}(t) = s_0 + \int \hat{v}(t) \; dt$$

Dabei ist $\hat{a}_0$ ein aus der Vergangenheit (d.h. Fahrweg vor GPS-Ausfall) ermittelter Schätzwert für den zeitlich langsam variierenden Offset des Beschleunigungssensors. Dieser Wert lässt sich durch bekannte Standard-Schätzverfahren ermitteln aus einem Vergleich der einerseits aus

$$\hat{v}(t) = \int a(t) dt$$

errechneten Geschwindigkeit mit der aus den GPS-Daten bekannten Geschwindigkeit. Entsprechend sind $v_0$ und $s_0$ die kurz vor GPS-Ausfall ermittelte Geschwindigkeit, sowie Fahrdistanz-Werte.

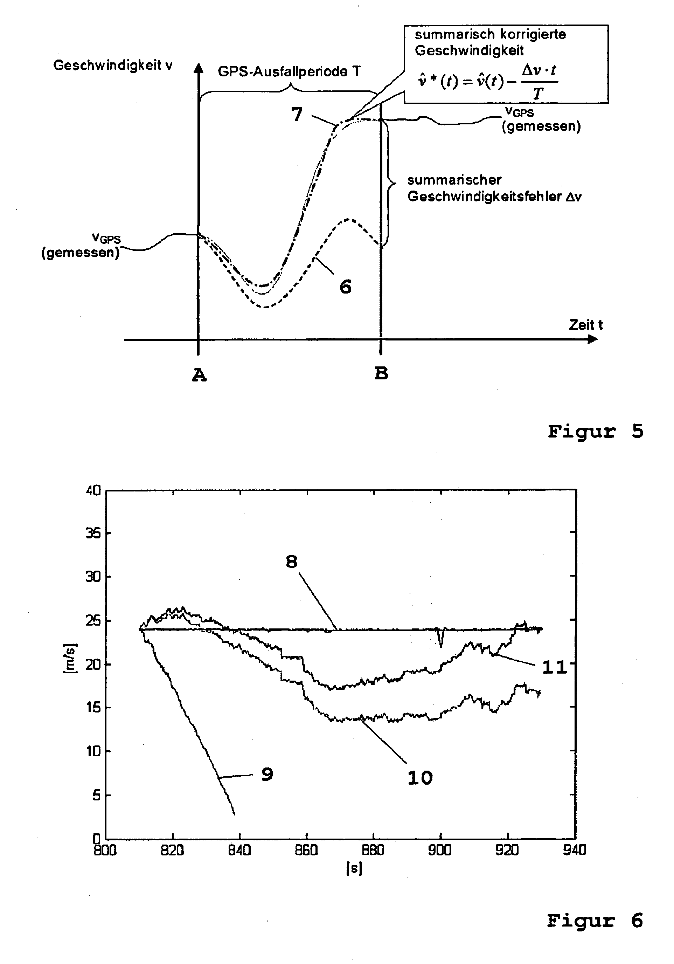

Werden nun während einer Ausfallszeit $T$ die Schätzwerte nach der obigen Integralgleichung fortgeschrieben, so werden üblicherweise die geschätzten Größen allmählich von den realen Werten wegdriften, da der reale Sensor-Offset sich ebenfalls in unbekannter Weise zeitlich verändert. Dieser Sachverhalt ist in Figur 5 schematisch dargestellt: Nach Wiederaufnahme des GPS-Signals $v_{GPS}$ kann der von der Offset-Drift verursachte Fehler $\Delta v$ nachträglich korrigiert werden (= Korrekturterm $\Delta v \cdot t/T$), so dass der in der Ausfallzeit ermittelte Geschwindigkeitsverlauf (6) anschließend dem wahren Verlauf besser angepasst ist (strichpunktierter Verlauf 7). Daraus ergibt sich dann auch eine Korrektur für die gefahrene Distanz, die summarisch mit dem Term $\Delta v \, T^2/2$ bestimmt wird.

In Figur 6 sind die auf verschiedene Weise bestimmten Geschwindigkeitsprofile über einen GPS-Ausfall (A bis B) von 120s Dauer dargestellt. Als Referenz kann die horizontal dargestellte, näherungsweise über die gesamte Periode konstante Geschwindigkeit von ca. 24m/s gelten. Die per GPS gemessene Geschwindigkeit (8) unterscheidet sich nur bei der Störung bei t=900 von diesem realen Verlauf. Ebenfalls dargestellt ist ein Geschwindigkeitsprofil (9), das aus dem Integral des unkorrigierten Beschleunigungsmesser-Signals gewonnen wurde, aber wegen des nicht kompensierten Offsets sehr schnell vom wahren Geschwindigkeitswert wegdriftet. Wenn eine Schätzung des Offsets vor dem GPS-Ausfall durchgeführt wurde und der Schätzwert während des Ausfalls zur Kompensation verwendet wird, so ergibt sich das Geschwindigkeitsprofil (10), analog zum Verlauf (6) in der Figur 5. Die zusätzlich nach Wiedereinsetzen der GPS-Geschwindigkeitsmessung um den Fehler $\Delta v$ nachträglich korrigierte Geschwindigkeitsschätzung liefert den Verlauf (11), der trotz weiterhin vorhandener Abweichung im Mittel näher bei dem realen Wert liegt, als die beiden anderen Varianten.

Neben diesem Schritt zur Korrektur des Beschleunigungs-Offsets wird in einem weiteren Schritt vorzugsweise in ähnlicher Weise auch eine Offset-Korrektur auf ein Gyroskop-Signal angewendet. Hier wird nun - analog wie oben für $\hat{v}(t)$ - eine Schätzung für den Winkelverlauf $\hat{\psi}(t)$ während des GPS-Ausfalls aus der via Gyroskop gemessenen Gierrate $\omega(t)$ wie folgt ermittelt:

$$\hat{\psi}(t) = \psi_0 + \int \omega(t) - \hat{\omega}_0 \; dt$$

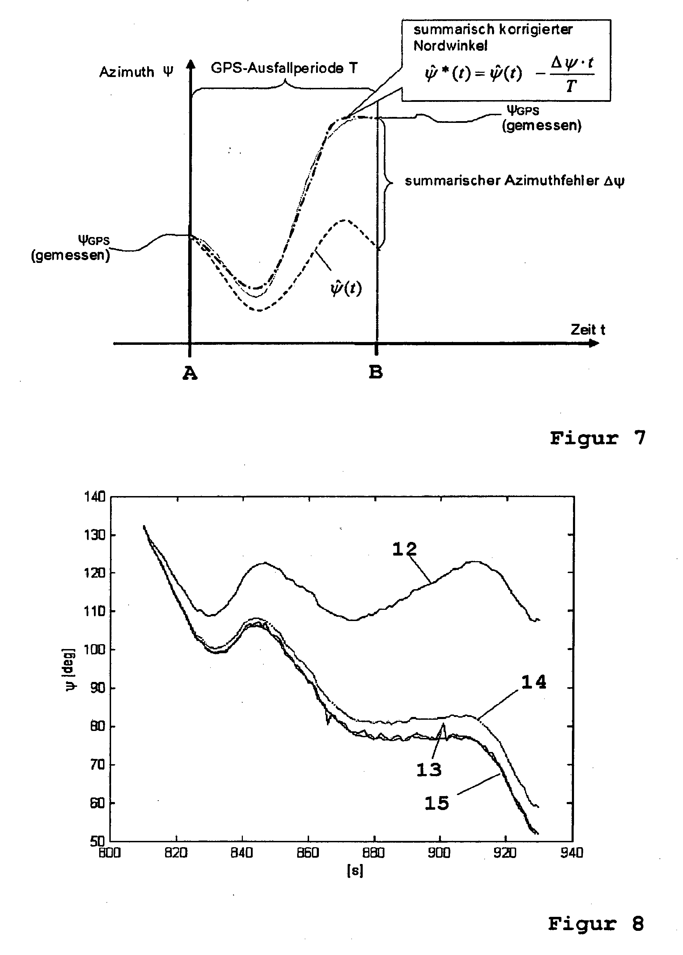

Als Prinzipbild ergibt sich die Figur 7, eine ganz analoge Darstellung zum oben behandelten Beschleunigungsoffset in Figur 5 - nur mit veränderten Bezeichnungen. Auch hier wird ein aus der Vergangenheit (d.h. vor GPS-Ausfall) ermittelter Schätzwert $\hat{\omega}_0$ für den zeitlich langsam variierenden Offset des Gyros nach Standard-Schätzverfahren aus einem Vergleich mit dem GPS-Azimuth ermittelt. Entsprechend ist $\hat{\psi}_0$ der kurz vor GPS-Ausfall ermittelte Azimuth (= Nordwinkel). Nach Wiedereinsetzen des GPS-Signals liegt durch Drift auch hier eine Abweichung $\Delta\psi$ zur kalkulierten Winkellage vor. Daraus lässt sich (in gleicher Weise wie für den Geschwindigkeitsfehler oben) der summarische Korrekturterm $\Delta\psi \cdot t/T$ ermitteln.

Die Figur 8 zeigt die verschiedenen Ergebnisse bei einem GPS Ausfall über 120s (entsprechend der in Fig. 6 dargestellten Situation). Das vom Anfangswinkel aufintegrierte, reine Gyroskop-Signal (12) driftet um mehr als 60° von unten dargestellten GPS-Winkelverlauf (13) weg. Bereits die mit der Offsetkompensation durchgeführte Integration (14) liegt wesentlich näher am realen Verlauf. Der nach Wiedereinsetzen des GPS-Signals um die festgestellte Abweichung $\Delta\psi$ korrigierte Verlauf (15) scheint bereits sogar 'besser' zu sein, als der etwas verrauschte GPS-Winkelverlauf (13), der durch gelegentliche Ausreißer aufgeraut ist.

Mit den beiden mittels Offset-Korrektur fortgeschriebenen Verläufen der Geschwindigkeit und des Azimuthwinkels kann bereits während des Ausfalls die Trajektorie der Fahrt, d. h. der Positionsverlauf aus

$$\hat{y}(t) = \int \hat{v}(t) \cdot \cos\hat{\psi}(t) \; dt$$

$$\hat{x}(t) = \int \hat{v}(t) \cdot \sin\hat{\psi}(t) \; dt$$

kontinuierlich 'hochgerechnet' werden. Dabei sind $\hat{x}$ und $\hat{y}$ die in ein metrisches, nordausgerichtetes Koordinatensystem umgerechneten geographischen Longitude bzw. Latitude-Koordinaten der errechneten Position, $\hat{v}(t)$ bzw. $\hat{\psi}(t)$ sind die aus den Messwerten der Inertialsensoren (Beschleunigungsmesser und Gier-Gyro) durch Integration gewonnen Schätzverläufe für Fahrzeuggeschwindigkeit bzw. Nordwinkel, wobei vorzugsweise mit den aus der Vergangenheit bekannten Offsets für Gyro und Beschleunigungsmesser korrigiert wird.

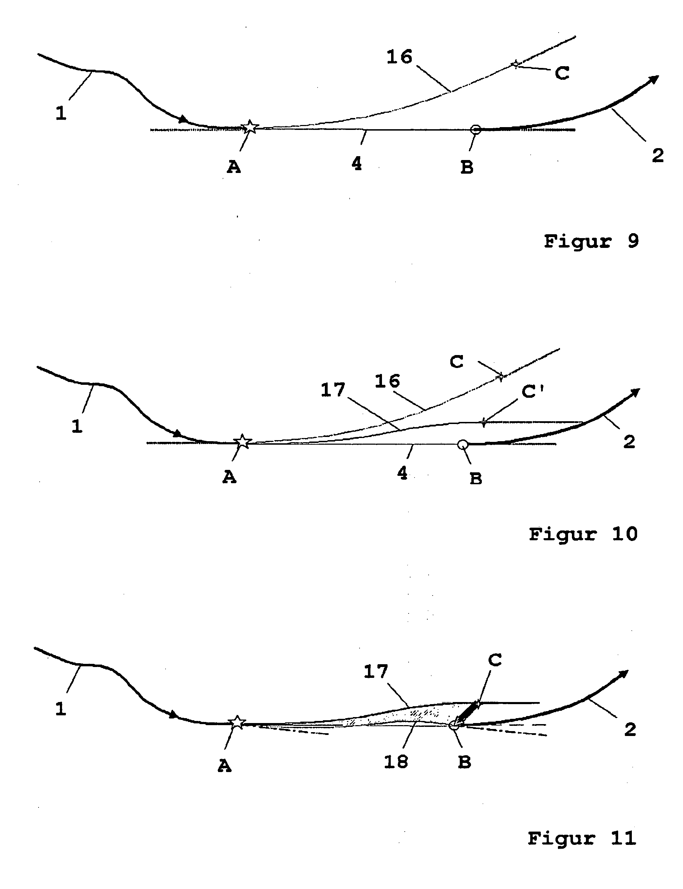

Wie in Figur 9 dargestellt, weicht die aus dieser fortlaufenden Hochrechnung erhaltene Trajektorie naturgemäß mit fortschreitender Dauer des GPS-Ausfalls von der tatsächlichen Route zunehmend ab. Ausgehend von letztem bekanntem Richtungswinkel sowie der Offsetschätzung kurz vor GPS-Ausfall (A) wird auf Basis der Inertialsensorik eine Trajektorie (16) fortgeschrieben, deren Richtungstangente am Beginn des Ausfalls noch mit der GPS-Trajektorie (4) übereinstimmt. Durch Drifteffekte wandert diese kalkulierte Route zunehmend aus und stimmt bei Wiedereinsetzten des GPS-Empfangs (B) weder in Richtung, noch in Position mit dem dann wieder messbaren realen Verlauf (2) überein.

Erst mit wieder einsetzendem GPS-Signal und damit bekannter Position, Richtung und Geschwindigkeit kann eine Anpassung der Trajektorie erfolgen. Dazu werden zunächst die festgestellten Abweichungen der Geschwindigkeit $\Delta v$ und der Richtung $\Delta\psi$ wie oben beschrieben zur Korrektur des kalkulierten Geschwindigkeits- und Richtungsverlaufs eingesetzt und daraus eine verbesserte Trajektorie (17) errechnet, deren Richtung nun auch am Endpunkt C' mit der Richtung der realen Route (4) im Punkt B übereinstimmt. Dennoch verbleibt im Allgemeinen eine Positionsabweichung $\Delta x(T)$. Diese Verhältnisse sind in Figur 10 dargestellt.

Der zweite Verbesserungsschritt der Trajektorienanpassung besteht darin, die am Wiedereinsetzpunkt $t=T$ noch vorhandene Positionsabweichung $\Delta x(T)$ zu beseitigen und in einer weiter verbesserten Rekonstruktion zu berücksichtigen. Dies geschieht dadurch, dass die Koordinatenvektoren $x(t)$ der verbesserten Trajektorie (17) nun noch um eine Koordinatenverschiebung nachträglich korrigiert werden, die wie folgt ausgeführt wird:

Sei bei $t=0$ der Beginn des GPS-Ausfalls mit einer Gesamtdauer $T$, so kann die anzubringende Koordinatenkorrektur als Funktion der Ausfallzeit $t$ wie folgt formuliert werden:

$$\underline{\Delta x}(t) = f(t) \cdot \underline{\Delta x}(T), \quad \text{mit } f(0) = 0 \text{ und } f(T) = 1$$

Die beiden Bedingungen bei $t=0$ und $t=T$ stellen dabei den stetigen Verlauf und Übergang der Rekonstruktion (18)in die GPS-Trajektorie sicher. Als Zeitfunktion, die diesen Bedingungen genügt, verwendet man im einfachsten Fall die lineare Funktion

$$f_{lin}(t) = \frac{t}{T},$$

die eine Koordinatenkorrektur nach der Gleichung

$$\underline{\Delta x}(t) = \frac{t}{T}\underline{\Delta x}(T)$$

vornimmt und im Beispiel etwa zu dem in Figur 11 dargestellten Korrekturverlauf (18) führt.

Durch diesen Korrekturverlauf wird die tatsächliche Route über die GPS-Lücke wesentlich besser wiedergegeben. Da die lineare Verschiebung wieder wie eine Drehung + Stauchung wirkt (vergl. Fig. 2), werden die Tangentenbedingungen durch die Verschiebung wieder leicht verletzt, d.h. die Richtung der neu kalkulierten Trajektorie stimmt im Übergangspunkt B nicht mehr exakt mit der tatsächlichen Richtung (aus den wieder einsetzenden GPS-Daten) überein.

Dieser negative Effekt kann in einer Erweiterung des erfindungsgemäßen Verfahrens dadurch unterdrückt werden, dass anstelle einer linearen, eine s-förmige Verschiebefunktion verwendet wird, deren Ableitung bei $t=0$ und bei $t=T$ verschwindet. Dadurch wird erreicht, dass in der Nähe des Endpunkts B nur eine Parallelverschiebung der kalkulierten Route erfolgt, so dass dort Gestalt und Tangentialbedingungen mit der tatsächlichen Route übereinstimmen. Eine sehr einfache Funktion, die diese Eigenschaft mitbringt, ist die kubische Parabel nach der Definition

$$f_S(t) = \frac{t^2}{T^2} \cdot \left(3 - 2\frac{t}{T}\right)$$

Wenn diese Funktion zur Trajektorienverschiebung nach

$$\underline{\Delta x}(t) = f_S(t) \cdot \underline{\Delta x}(T)$$

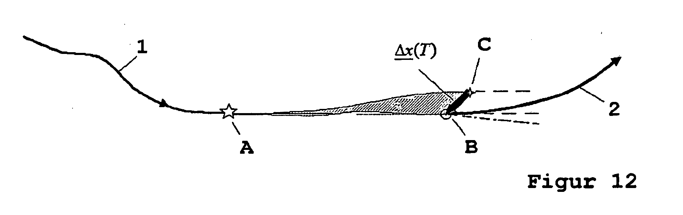

genutzt wird, wird die Erfüllung der Tangentenbedingungen bei $t=0$ und $t=T$ erzwungen und die Abweichungen zur realen Route gehen weiter zurück. Die Figur 12 zeigt die nach diesem Verfahren errechnete Trajektorie (19), die von der tatsächlichen Fahrstrecke kaum noch abweicht.

Das erfindungsgemäße Verfahren der nachträglichen Fehlerkorrektur bietet eine wesentliche Reduktion der Driftfehler, so dass die Zuverlässigkeit und Güte der Positionsschätzungen bereits während eines GPS-Ausfalls wesentlich verbessert werden kann. Mit dem erfindungsgemäßen vorgeschlagenen Verfahren der nachträglichen Rekonstruktion der gefahrenen Route mit Offsetkompensation sowie Trajektorienkorrektur ist es zuverlässiger möglich, den bei einem GPS-Ausfall gefahrenen Positionsverlauf, die Wegstrecke und Winkelprofile nachträglich zu rekonstruieren. Auf Basis solch rekonstruierter Profile lässt sich dann eine Mautentscheidung wesentlich besser absichern, als dies auf Basis einer einseitigen (vor dem GPS-Ausfall erfolgten) reinen Offsetschätzung möglich ist.

**Patentansprüche**

1. Verfahren zur Fahrwegbestimmung eines von einem Fahrzeug zwischen zwei bekannten Positionen (A, B) zurückgelegten Streckenabschnitts (4) mittels fahrzeuginterner Messeinrichtungen, wie z.B. Gyroskope und Beschleunigungssensoren, wobei:

- ein Fahrtrichtungs- und ein Geschwindigkeitsprofil bei Durchfahren einer bekannten Route (1) durch die fahrzeuginternen Messeinrichtungen aufgezeichnet und eine Abweichung zwischen der daraus kalkulierten Route und der bekannten Route (1) ausgewertet und Offset-Fehler der Messeinrichtungen bestimmt werden,
- zwischen den zwei bekannten Positionen (A, B) ein Fahrtrichtungs- und ein Geschwindigkeitsprofil durch die fahrzeuginternen Messeinrichtungen aufgezeichnet und daraus eine rechnerische Route (3) bestimmt wird, und
- die zuvor ermittelten Offset-Fehler der Messgeräte zur Korrektur der Fahrtrichtungs- und Geschwindigkeitsprofile zwischen den zwei bekannten Positionen (A, B) eingesetzt werden, wobei eine Endposition (C) der rechnerischen Route (3) nach Durchfahren des Streckenabschnitts (4) mit der bekannten Position (B) durch Korrektur der rechnerischen Route zur Übereinstimmung gebracht wird, **dadurch gekennzeichnet, dass**
- nach Durchfahren des Streckenabschnitts (4) eine tatsächliche Richtung und Geschwindigkeit des Fahrzeugs z.B. aus GPS-Daten ermittelt werden und vorhandene Abweichungen zum aufgezeichneten Fahrtrichtungs- und Geschwindigkeitsprofil zur nachträglichen Korrektur des Fahrtrichtungsprofils und des Geschwindigkeitsprofils eingesetzt werden, und

- auf Basis des korrigierten Fahrtrichtungs- und Geschwindigkeitsprofils eine korrigierte rechnerische Route (3) derart ermittelt wird, dass die Richtung der rechnerischen Route (3) in der bekannten Position (B) mit der tatsächlichen Richtung übereinstimmt.

2. Verfahren nach Anspruch 1,
**dadurch gekennzeichnet, dass** die Korrektur der rechnerischen Route (3) gemäß folgender Koordinatenkorrektur $\Delta$x erfolgt:

$$(1) \quad \Delta x(t) = f(t) \cdot \Delta x(T) \quad \text{mit} \quad f(0) = 0 \quad \text{und.} \quad f(T) = 1$$

wobei

$$(2) \quad f(t) = \frac{t^2}{T^2} \cdot \left(3 - 2\frac{t}{T}\right) \quad \text{ist.}$$

3. Verwendung des Verfahrens zur Fahrwegbestimmung nach einem der vorangehenden Ansprüche in Mautsystemen.

**Claims**

1. Method for determining the travelling distance of a route segment (4) travelled by a vehicle between two known positions (A, B) by means of on-board measuring devices such as gyroscopes and acceleration sensors, wherein:

   - a travelling direction and a speed profile when travelling a known route (1) is recorded by the on-board measuring devices, a divergence between the route calculated therefrom and the known route (1) is evaluated, and offset errors of the measuring devices are determined,
   - a travelling direction and a speed profile is recorded by the on-board measuring devices between the two known positions (A, B) and a calculated route (3) is determined therefrom, and
   - the previously determined offset errors of the measuring devices are used for correcting the travelling direction and speed profiles between the two known positions (A, B), wherein an end position (C) of the calculated route (3) is brought into compliance with the known position (B) after passing through the route segment (4) by correcting the calculated route, **characterised in that**
   - after passing through the route segment (4), an actual speed and direction of the vehicle are determined, e.g. from GPS data, and any divergences from the recorded travelling direction and speed profile are used for the later correction of the travelling direction profile and the speed profile, and **in that**
   - on the basis of the corrected travelling direction and speed profile, a corrected calculated route (3) is determined in such a way that the direction of the calculated route (3) agrees in the known position (B) with the actual direction.

2. Method according to claim 2,
**characterised in that** the calculated route (3) is corrected in accordance with the following coordinate correction $\Delta$x:

$$(1) \quad \Delta x(t) = f(t) \bullet \Delta x(T) \text{ with } f(0) = 0 \text{ and } f(T) = 1$$

wherein

$$(2) \qquad f(t) = \frac{t^2}{T^2} \bullet (3\text{-}2\frac{t}{T}).$$

3. Use of the method for determining the travelling distance according to any of the preceding claims in a toll system.

**Revendications**

1. Procédé destiné à déterminer la trajectoire d'un tronçon de trajet (4) parcouru par un véhicule entre deux positions connues (A, B) à l'aide de dispositifs de mesure embarqués, comme par exemple des gyroscopes et des capteurs d'accélération :

    - un profil de vitesse et de la marche en passant par un itinéraire connu (1) étant enregistrés au moyen des dispositifs de mesure embarqués et un écart entre l'itinéraire calculé par lesdits dispositifs de mesure et l'itinéraire connu (1) et une erreur de décalage des dispositifs de mesure étant calculés,
    - entre les deux positions connues (A, B) un profil de vitesse et de sens de circulation étant enregistré au moyen des dispositifs de mesure embarqués et un itinéraire calculé (3) étant déterminé à partir dudit profil, et
    - les erreurs de décalage déterminées précédemment des appareils de mesure destinés à la correction des profils de vitesse et de sens de circulation étant insérées entre les deux positions connues (A, B), une position finale (C) de l'itinéraire calculé (3) après le passage du tronçon de trajet (4) étant amenée en concordance avec la position connue (B) par la correction de la route calculée, **caractérisé en ce qu'**
    - après le passage du tronçon de trajet (4) une direction réelle et une vitesse du véhicule sont déterminées par exemple à partir de données GPS et des écarts existants par rapport au profil de vitesse et de sens de circulation enregistré sont insérés pour la correction ultérieure du profil de sens de circulation et du profil de vitesse, et
    - en fonction du profil de la vitesse et du sens de circulation corrigé un itinéraire calculé (3) corrigé est déterminé de telle sorte que la direction de l'itinéraire calculé (3) concorde avec la direction réelle dans la position (B) connue.

2. Procédé selon la revendication 1, **caractérisé en ce que** la correction de l'itinéraire calculé (3) s'effectue selon la correction des coordonnées suivants aux :

$$(1) \qquad \Delta x(t) = f(t) \bullet \Delta x(T) \text{ avec } f(0) = 0 \text{ et. } f(T) = 1$$

$$(2) \qquad f(t) = \frac{t^2}{T^2} \bullet (3 - 2\frac{t}{T}).$$

3. Utilisation du procédé destiné à la détermination de la trajectoire selon l'une quelconque des revendications précédentes dans des systèmes de péage.

Figur 1

Figur 2

**Figur 3**

**Figur 4**

Geschwindigkeit v

GPS-Ausfallperiode T

summarisch korrigierte
Geschwindigkeit

$$\hat{v}^{*}(t) = \hat{v}(t) - \frac{\Delta v \cdot t}{T}$$

7

$v_{GPS}$
(gemessen)

$v_{GPS}$
(gemessen)

summarischer
Geschwindigkeitsfehler Δv

6

Zeit t

A                    B

**Figur 5**

40

35

30

8

25

[m/s]

20                                                          11

15                                                          10

10

9

5

0
800    820    840    860    880    900    920    940
[s]

**Figur 6**

Figur 7

Figur 8

**Figur 9**

**Figur 10**

**Figur 11**

$\underline{\Delta}x(T)$

**C**

**1**

**A**

**B**

**2**

**Figur 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004053956 A1
- US 6240367 B1
- WO 03038763 A1
- US 5159556 A
- EP 0110171 A